# EUROPEAN PATENT APPLICATION

(11) **EP 2 583 807 A1**
(43) Date of publication of application: **24.04.2013**
(21) Application number: 11795496.6
(22) Date of filing: 17.05.2011
(51) Int. Cl.: B29C 33/30, B22D 17/22

(54) **METAL MOLD POSITIONING AND FIXING DEVICE**

(30) Priority: 16.06.2010 JP 2010137157
(71) Applicant: Pascal Engineering Corporation, Itami-shi Hyogo 664-8502 (JP)
(72) Inventor: KITAURA, Ichiro, Itami-shi Hyogo 664-8502 (JP); MUNECHIKA,Takayuki, Itami-shi Hyogo 664-8502 (JP)
(74) Representative: Roberts, Mark Peter
(86) International application number: PCT/JP2011/061315
(87) International publication number: WO 2011/158588

(57) **Abstract**

In a die positioning /74 fixing device that positions and fixes a die (M) on the surface (2a) of a plate member (2) in directions parallel to the surface and in the direction orthogonal to the surface: the die and the plate member include a first positioning mechanism (10P) that positions the die in directions parallel to the surface, a second positioning mechanism (20P) that performs positioning and that is disposed at a position apart from the first positioning mechanism (10P), and an orthogonal direction positioning mechanism (5P) that positions the die in the direction orthogonal to the surface; each of the positioning mechanisms (10P, 20P) includes a plate member side tapered convex engagement portion (12, 22) and an annular engagement portion (31, 41) that is provided on the side of the die and that is capable of engaging with the tapered convex engagement portion; there are provided with a plurality of bolt holes (13, 23) that are formed on the plate member side, a plurality of bolt through holes (7a) that are formed on the die, and a plurality of clamping bolts (9) each of which can be passed through one of these bolt through holes and can be screwingly engaged into one of the bolt holes; and, due to the engaging operation of the clamping bolts, each of the annular engagement portions (31, 41) is elastically deformed so as to increase its diameter, so that it is closely engaged with the corresponding tapered convex engagement portion (12, 22).

## Description

### TECHNICAL FIELD

The present invention relates to a die positioning / fixing device that positions and fixes a die for an injection molding machine or for a pressing machine at high accuracy on the surface of a plate member.

### BACKGROUND TECHNOLOGY

A die for an injection molding machine is composed of a fixed die that is fixed to a fixed plate and a movable die that is fixed to a movable plate. A locator ring is provided so as to project at the central portion of the rear surface of the fixed die that opposes the surface of the fixed plate, and positioning at high accuracy is performed by fitting this locator ring into a concave portion on the fixed plate. Normally, the movable die is positioned by setting it on the movable plate in a state of being combined with the fixed die, and by fitting a plurality of knock pins into the movable die and the movable plate.

If a deviation occurs in the relative position of the movable die with respect to the fixed die, then the quality of the molded product is deteriorated, and in an extreme case a large number of poor quality goods may be manufactured. In particular, since recently the shape and the construction of molded products has become more complicated, demands for accuracy of positioning of the movable die and the fixed die have become more stringent.

For example, with the die attachment device for an injection molding machine of Patent Document #1, as shown in the second embodiment of this publication, a structure is provided in which a movable die is attached to a movable plate by a fine adjustment device that is composed of a XY direction fine adjustment mechanism and a rotational direction fine adjustment mechanism, and it is possible to adjust the position of the movable die minutely in the horizontal X direction and in the vertically direction and in the rotational direction around the axis of a locator ring.

The abovementioned XY direction fine adjustment mechanism comprises an X and Y direction axis adjusting surface plate that is larger than the movable die, a pair of left and right holding members, two pairs of upper and lower holding members, two pairs of upper and lower fixed members, a pair of left and right bolt type center adjustment mechanisms, a pair of upper and lower bolt type axis adjusting mechanisms, and also a plurality of guide pins and bolts and so on. And the roatational direction fine adjustment mechanism comprises an axis adjusting surface plate, a pair of bolt type axis adjusting mechanisms, and also a plurality of bolts and so on.

With the die positioning mechanism for an injection molding machine of Patent Document #2, a first locator ring is fixedly attached to the rear surface of the fixed die, and a second locator ring is fixed to the fixed plate, with the first locator ring fitting tightly into it. The external shape of the first locator ring is almost polygonal, and it is built as a tapered engagement member whose diameter gets smaller towards its end, while a tapered female engagement portion of the second locator ring is also almost polygonal, and it is built in a tapered shape whose diameter gets smaller in the depth direction.

Patent Document #1: Japanese Laid-Open Patent Publication 2001- 47477.
Patent Document #2: Japanese Laid-Open Patent Publication 2010- 99958.

### SUMMARY OF THE INVENTION

### PROBLEMS TO BE SOLVED BY THE INVENTION

With a typical die positioning device according to the prior art, the fixed die is provided with a locator ring that projects from its rear surface, and, since it is necessary for a circular concave portion to be formed on the surface of the plate member for that locator ring to fit into, accordingly the applicability to general uses of the die is lost, and at the same time the applicability to general uses of the surface of the plate member is lost.

Since a plurality of knock pin holes are formed on the die and on the surface at high positional accuracy, and since it is necessary to fit in a plurality of knock pins when positioning the die, accordingly not only does the design of the die become troublesome, but also the amount of labor when attaching the die is increased.

With the die attachment device of Patent Document #1, since the construction is complicated and the number of components is also large, accordingly there are the problems that because the die attachment device takes up a lot of space it is not suitable for being set up in a limited space between the fixed plate and the movable plate, that the cost of production is high, that large amounts of labor and time are required for minute adjustment in the X direction, in the Y direction, and in the rotational direction during the positioning of the movable die, and so on.

And, with the die positioning mechanism of Patent Document #2, the applicability to general uses of the movable die and the movable plate is lost, since it becomes impossible to use a circular annular locator ring (such as is equipped to an ordinary fixed die) and a circular concave portion provided on the fixed plate. Due to this, it becomes impossible to apply a fixed die of this special type of construction to the fixed plate of an already existing injection molding machine in an injection molding factory, and it becomes impossible to apply a fixed plate of this special type of construction to an already existing fixed die in an injection molding factory.

Objects of the present invention are: to provide a die positioning /fixing device that is capable of positioning and fixing a die on the surface of a plate member rapidly at high accuracy; to provide a die positioning /fixing device of a simple and compact structure that can be manufactured at a cheap cost; to provide a die positioning / fixing device that is capable of maintaining the applicability to multiple uses of the die and of the plate member.

### MEANS TO SOLVE THE PROBLEMS

The present first invention presents a die positioning / fixing device for positioning and fixing a die on a surface of a plate member in directions parallel to the surface of the plate member and in a direction orthogonal thereto; wherein said die positioning / fixing device is characterized in that: the die and the plate member comprise a first positioning mechanism that positions the die in directions parallel to the surface of the plate member, a second positioning mechanism that is disposed at a position apart from the first positioning mechanism and that regulates and positions the die so as not to rotate in the directions parallel to the surface of the plate member around the first positioning mechanism, and a orthogonal direction positioning mechanism that positions the die in a direction orthogonal to the surface of the plate member; each of the first and second positioning mechanisms comprises a tapered convex engagement portion that is provided to the plate member, and an annular engagement portion that is provided to the die and that can engage with the tapered convex engagement portion; there are provided with a plurality of bolt holes that are formed in the plate member side, a plurality of bolt through holes that are formed in the die so as to correspond to the plurality of bolt holes, and a plurality of clamping bolts that can pass through the plurality of bolt through holes and can each be screwingly engaged with one of the plurality of bolt holes; and by means of screwingly engagement operation of the clamping bolts, the annular engagement portions of the first and second positioning mechanisms are both elastically deformed so as to increase their external diameters and so as each to engage closely to its corresponding tapered convex engagement portion.

The present second invention presents a die positioning / fixing device for positioning and fixing a die on a surface of a plate member in directions parallel to the surface of the plate member and in a direction orthogonal thereto; wherein said die positioning / fixing device is characterized in that: a first auxiliary member is fixedly provided to the surface of the plate member, a second auxiliary member corresponding to the first auxiliary member is fixedly provided to the die; the first and second auxiliary members comprise a first positioning mechanism that positions the die in directions parallel to the surface of the plate member, and a second positioning mechanism that is disposed at a position apart from the first positioning mechanism and that regulates and positions the die so as not to rotate in the directions parallel to the surface of the plate member around the first positioning mechanism; the die and the plate member comprise an orthogonal direction positioning mechanism that positions the die in the direction orthogonal to the surface of the plate member; each of the first and second positioning mechanisms comprises a tapered convex engagement portion that is provided to the first auxiliary member, and an annular engagement portion that is provided to the second auxiliary member and that can engage with the tapered convex engagement portion; there are provided with a plurality of bolt holes that are formed in the first auxiliary member side, a plurality of bolt through holes that are formed in the second auxiliary member so as to correspond to the plurality of bolt holes, and a plurality of clamping bolts that can pass through the plurality of bolt through holes and can each be screwingly engaged with one of the plurality of bolt holes; and by means of screwingly engagement operation of the clamping bolts, the annular engagement portions of the first and second positioning mechanisms are both elastically deformed so as to increase their external diameters and so as each to engage closely to its corresponding tapered convex engagement portion.

### ADVANTAGES OF THE INVENTION

According to the present first invention, by approaching the die to the surface of the plate member, by engaging each of the annular engagement portions of the first and second positioning mechanisms to each of the tapered convex engagement portions on the surface of the plate member, and by passing the clamping bolts through the bolt through holes in the die and screwingly engaging them respectively into the bolt holes on the plate member side, and thus elastically deforming each of the annular engagement portions of the first and second positioning mechanisms so that its external diameter is increased and thereby closely engaging it with its corresponding one of the convex engagement portions, along with performing positioning in the directions parallel to the surface of the plate member with the first positioning mechanism, it is also possible to perform regulation, positioning, and fixing with the second positioning mechanism so that no rotation takes place in the direction parallel to the surface.

Since, at this time, the annular engagement portion is elastically deformed in the direction to increase its external diameter and is closely engaged to the tapered convex engagement portion, accordingly it is possible to perform the positioning at high accuracy. Moreover, since no adjustment work for positioning the members is necessary during this positioning and fixing process, accordingly it is possible to perform the positioning and fixing rapidly, and it is possible to manufacture the device at a cheap cost, since it is possible to build the core of the first and second positioning mechanisms in a simple and compact manner. Moreover, since it is possible to omit any locator ring on the rear surface of the die and any concave circular portion on the surface of the plate member, accordingly it is also possible to maintain the applicability to multiple uses of the die and of the fixed plate.

According to the present second invention, in principle, similar beneficial effects are obtained as same with the first invention.
Moreover, since it suffices merely to supplement the simple modifications of additionally fixing the first auxiliary member to the plate member and of additionally fixing the second auxiliary member to the die, and since thus it is possible to implement the present invention by only performing the minimum level of structural work on the die and the plate member, accordingly not only is it possible to apply the present invention to an existing plate member and die in a simple and easy manner, but also it is possible to preserve the applicability of the die and the plate member to multiple uses to yet a further extent.

In addition to the structure of the first invention described above, it would also be acceptable to employ structures of the following types:
(1) The tapered convex engagement portions, along with having tapered engagement surfaces that reduce in diameter towards the die, may be fixed to the plate member via flanges that are formed integrally with the tapered convex engagement portions. According to this structure, when approaching the die to the surface of the plate member, not only is it possible to obtain a guidance function due to the tapered convex engagement portions, but also it is possible to fix the tapered convex engagement portions to the plate member in a simple manner via the flanges that are formed integrally therewith.

(2) The annular engagement portions may be formed on annular engagement members that are fixed to the die, and these annular engagement members may have annular grooves that surround the external peripheries of the annular engagement portions and that moreover permit elastic deformation of the annular engagement portions so that their external diameters are increased. Since, according to this structure, this construction is adopted in which elastic deformation of the annular engagement portions is permitted via their annular grooves so that their external diameters are increased, accordingly it is possible to employ a construction in which the annular engagement members are fitted into concave apertures for fixing of the die.

And, in addition to the structure of the present second invention described above, it would also be acceptable to employ structures of the following types:
(3) The tapered convex engagement portions, along with having tapered engagement surfaces that reduce in diameter towards the second auxiliary member, may be fixed to the first auxiliary member via flanges formed integrally with the tapered convex engagement portions. According to this structure, similar advantageous effects are obtained as in the case of (1).

(4) The annular engagement portions may be formed on annular engagement members fixed to the second auxiliary member, and these annular engagement members may have annular grooves that surround the external peripheries of the annular engagement portions and that moreover permit elastic deformation of the annular engagement portions so that their external diameters are increased. According to this structure, similar advantageous effects are obtained as in the case of (2).

### BRIEF DESCRIPTION OF THE DRAWINGS

Fig. 1 is an elevation view of a fixed plate of an injection molding machine of a first embodiment of the present invention, as seen from the side of a movable plate;
Fig. 2 is a vertical side sectional view of the fixed plate, a fixed side die, and a die positioning / fixing device;
Fig. 3 is an enlarged sectional view of a first positioning mechanism;
Fig. 4 is a perspective view of a first reference member;
Fig. 5 is a perspective view of a second reference member;
Fig. 6 is a perspective view of an annular engagement member;
Fig. 7 is a figure corresponding to Fig. 2 for a second embodiment;
Fig. 8 is a figure corresponding to Fig. 2 for a third embodiment;
Fig. 9 is a vertical side sectional view of a construction surrounding a clamping bolt of the injection molding machine of Fig. 8;
Fig. 10 is a figure corresponding to Fig. 1 for a fourth embodiment; and
Fig. 11 is a figure corresponding to Fig. 2 for the fourth embodiment.

### BEST MODE FOR IMPLEMENTING THE INVENTION

In the following, the present invention will be explained on the basis of embodiments for implementation thereof.
The present invention relates to a die positioning / fixing device that positions and fixes a die on the surface of a plate member of a machine such as an injection molding machine, a pressing machine, or a machine of some other type, in the directions parallel to the surface of the plate member and in the direction perpendicular to the surface of the platemember. It should be understood that, in the following embodiments, "positioning in the directions parallel to the surface of the plate member " means that the position is determined and fixed in the directions that are parallel to the surface, while "positioning in the direction orthogonal to the surface of the plate member " means that the position is determined and fixed in the direction that is orthogonal to the surface.

### EMBODIMENT 1

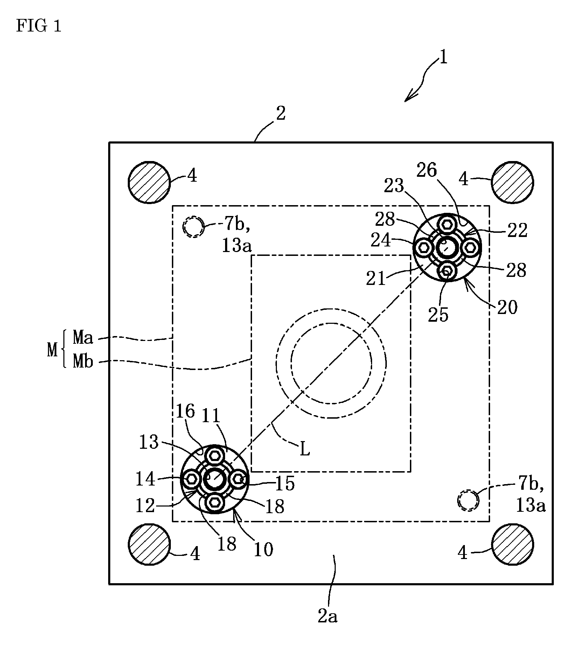

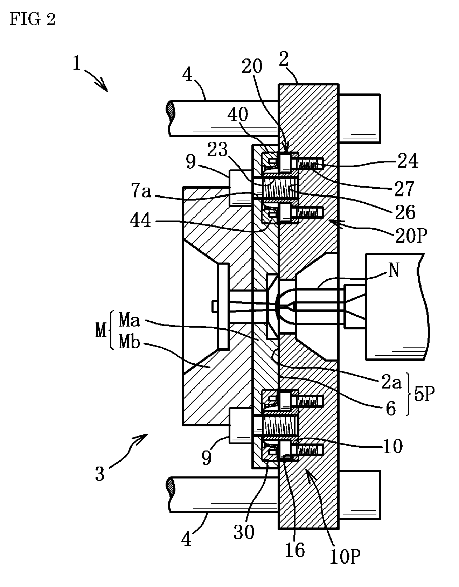

This embodiment is an example of a case in which the present invention is applied to a die positioning / fixing device 3 that positions and fixes a fixed die M on a surface 2a of a fixed plate 2 of an injection molding machine 1.
As shown in Figs. 1 and 2, the fixed side die M is attached to the surface 2a of the fixed plate 2 of the injection molding machine 1, and, although this is not shown in the figure, a movable side die is attached to the surface of a movable plate. The fixed side die M (hereinafter termed the "die M") comprises a die plate Ma that is fixed to the surface 2a and a die main body Mb that is integrally fixed to this die plate Ma. Guide rods 4 that guide the movable plate are inserted into and fixed to each of the corner portions of the fixed plate 2 of the injection molding machine 1. An injection nozzle N can be protruded into a central hole portion of the fixed plate 2, and it is arranged for molten synthetic resin to be injected from this injection nozzle N into a cavity that is defined by the fixed die M and the movable die.

This die positioning/ fixing device 3 is a device that positions and fixes the die M on the vertical surface 2a of the fixed plate 2, which is in a vertical attitude (this corresponds to the plate member). This die positioning/fixing device 3 comprises first and second positioning mechanisms 10P and 20P, an orthogonal direction positioning mechanism 5P, four clamping bolts 9, four bolt through holes 7a, 7b, and four bolt holes 13, 23, 13a.

The first positioning mechanism 10P is provided to the die M and the fixed plate 2 at a position that corresponds to the lower left corner portion of the die M in Fig. 1. This first positioning mechanism 10P is a device that positions and fixes the fixed die 2 (i.e. die M) in directions parallel to the surface 2a.

The second positioning mechanism 20P is provided to the die M and the fixed plate 2 at a position that is in a diagonal relationship with the first positioning mechanism 10P and that is apart from the first positioning mechanism 10P, in other words that is at a position that corresponds to the upper right corner portion of the die M in Fig. 1. This second positioning mechanism 20P is a device that regulates, positions, and fixes the die M so that it does not rotate in the direction parallel to the surface 2a around the first positioning mechanism 10P as a center.

And the orthogonal direction positioning mechanism 5P is a device that positions the die M in the direction orthogonal to the surface 2a. This orthogonal direction positioning mechanism 5P is constituted by the surface 2a that is formed as a vertical flat plane orthogonal to the axis of the injection nozzle N (and that is a reference seating surface), and by the rear surface 6 of the die M that, in the state in which the die M has been positioned and fixed, is closely contacted against the surface 2A.

Next, the first positioning mechanism 10P will be explained.
As shown in Figs. 1 through 4, 6, the first positioning mechanism 10P comprises a first reference member 10 that has a tapered convex engagement portion 12, a first annular engagement member 30 that is installed on a portion of the rear surface side of the die M so as to oppose this first reference member 10, and so on.

The first reference member 10 comprises a flange portion 11 that is shaped as a circular plate, the tapered convex engagement portion 12 that projects from the central portion of the flange portion 11 integrally towards the die M, a bolt hole 13 that is formed so as to pierce through the central portion of the tapered convex engagement portion 12 and that is oriented in the horizontal direction orthogonal to the surface 2a, and four fixing bolts 14 and four bolt through holes 15 for fixing the flange portion 11 to the fixed plate 2. A bolt through hole 7a is formed in the die M so as to be concentric with the bolt hole 13.

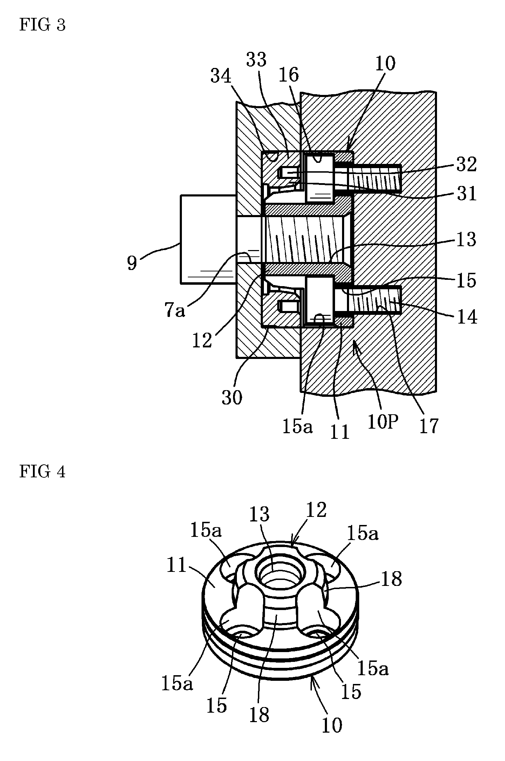

In a state in which the flange portion 11 of the first reference member 10 is contained within a fixing hole 16 that is formed in the fixed plate 2, the flange portion 11 is fixed by passing each of the four fixing bolts 14 through a corresponding one of the bolt through holes 15 and screwingly engaging it with a bolt hole 17 on the side of the fixed plate 2. The outer surface of the flange portion 11 constitutes a vertical surface that is concaved from the surface 2a by a minute amount (refer to Fig. 3).

As shown in Fig. 4, bolt head portion receiving apertures 15a of each of the bolt through holes 15 are formed so as partially to overlap the tapered convex engagement portion 12 as seen in plan view. A portion of about one third of the diameter of each of the bolt head portion receiving apertures 15a of the bolt through holes 15 partially overlaps the tapered convex engagement portion 12 as seen in plan view. The thicknesses of the wall portions between the bolt head portion receiving apertures 15a and the outer peripheral surface of the flange portion 11 are extremely small. Due to this, it is possible to reduce the diameter of the flange portion 11 to the maximum extent, so that it is possible to make the first reference member 10 more compact and to reduce and economize on its cost of production.

Four tapered engagement surfaces 18 are formed on the external periphery of the tapered convex engagement portion 12 at positions in the circumferential direction that divide it into four equal parts, between each adjacent pair of the bolt head portion receiving apertures 15a in the circumferential direction, and these surfaces reduce in diameter in the direction towards the die M. The length in the circumferential direction of each of the tapered engagement surfaces 18 is about one eighth of the periphery. Due to this, when an annular engagement portion 31 of a first annular engagement member 30 that will be described hereinafter is elastically deformed so that its diameter is increased, elastic deformation is promoted, so that it is possible to enhance the tight contact between the tapered engagement surfaces 18 and the annular engagement portion 31.

Next, the second positioning mechanism 20P will be explained.
As shown in Figs. 1, 2, 5, and 6, the second positioning mechanism 20P comprises a second reference member 20 that has a tapered convex engagement portion 22, a second annular engagement member 40 that is installed on a portion of the rear surface side of the die M so as to oppose the second reference member 20, and so on.

The second reference member 20 has a similar structure to that of the first reference member 10, with the exception of a tapered engagement surface 28. The second reference member 20 comprises a flange portion 21 that is shaped as a circular plate, the convex engagement portion 22 that projects from the central portion of the flange portion 21 towards the die M, a bolt hole 23 that is formed in the central portion of the second reference member 20 and that is oriented in the horizontal direction orthogonal to the surface 2a, and four fixing bolts 24 and four bolt through holes 25 for fixing the flange portion 21 to the fixed plate 2. A bolt through hole 7a is formed in the die M so as to be concentric with the bolt hole 23.

In a state in which the flange portion 21 of the second reference member 20 is contained within a fixing hole 26 that is formed in the fixed plate 2, the flange portion 21 is fixed to the fixed plate 2 by passing each of the four fixing bolts 24 through a corresponding one of the bolt through holes 25 and screwingly engaging it with a bolt hole 27 on the side of the fixed plate 2. The outer surface of the flange portion 21 constitutes a vertical surface that is concaved away from the surface 2a by a minute amount.

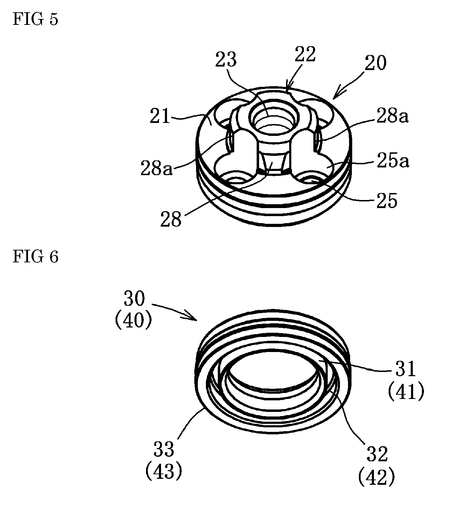

As shown in Fig. 5, a bolt head portion receiving aperture 25a of each of the bolt through holes 25 are formed so as partially to overlap the tapered convex engagement portion 22 as seen in elevation view. A portion of about one third of the diameter of each of the bolt head portion receiving apertures 25a of the bolt through holes 25 partially overlaps the tapered convex engagement portion 22 as seen in plan view. The thicknesses of the wall portions between the bolt head portion receiving apertures 25a and the outer peripheral surface of the flange portion 21 are extremely small. Due to this, it is possible to reduce the diameter of the flange portion 21 to the maximum extent, so that it is possible to make the second reference member 20 more compact and to reduce and economize on its cost of production.

Two tapered engagement surfaces 28 are formed on the external periphery of the tapered convex engagement portion 22 at positions in the circumferential direction that divide it into two equal parts, between each adjacent pair of the bolt head portion receiving apertures 25a in the circumferential direction, and these tapered engagement surfaces 28 reduce in diameter in the direction towards the die M. The two tapered engagement surfaces 28 oppose one another in a direction that is orthogonal to the center line L in Fig. 1 that joins between the axes of the first and second reference members 10, 20. The length in the circumferential direction of each of the tapered engagement surfaces 28 is about one eighth of the periphery. Due to this, elastic deformation is promoted when an annular engagement portion 41 of a second annular engagement member 40 that will be described hereinafter is elastically deformed so that its diameter is increased, so that it is possible to enhance the tight contact between the tapered engagement surfaces 28 and the annular engagement portion 41 (refer to Fig. 2).

As shown in Figs. 2, 3, and 6, the first annular engagement member 30 comprises the annular engagement portion 31 that is capable of being elastically deformed in the direction to increase its external diameter when it is fitted over the tapered convex engagement portion 12 of the first reference member 10 and the clamping bolt 9 is engaged, and that also is capable of closely engaging with each of the four tapered engagement surfaces 18 of the tapered convex engagement portion 12, an annular groove 32 on the external periphery thereof, and an external peripheral wall portion 33 on the external periphery of the groove.

And, as shown in Figs. 2 and 6, the second annular engagement member 40 comprises the annular engagement portion 41 that is capable of being elastically deformed in the direction to increase its external diameter when it is fitted over the tapered convex engagement portion 22 of the second reference member 20 and the clamping bolt 9 is engaged, and that also is capable of closely engaging with each of the two tapered engagement surfaces 28 of the tapered convex engagement portion 22, an annular groove 42 on the external periphery thereof, and an external peripheral wall portion 43 on the external periphery of the groove. The first and second annular engagement members 30, 40 are fixed to the die M by being pressed into concave attachment portions 34, 44 that are provided as concavities on its rear surface side. The rear surfaces of the first and second annular engagement members 30, 40 are concaved away from the rear surface of the die M by minute amounts.

As shown in Fig. 6, the annular grooves 32, 42 opening to the rear side are formed on the outer external peripheries of the annular engagement portions 31, 41 of the first and second annular engagement members 30, 40 respectively, with the annular grooves 32,42 permitting elastic deformation of the annular engagement portions 31, 41 in the direction to increase their external diameters. The annular engagement portions 31, 41 are made so as to have moderate rigidity to resist against displacement in directions parallel to the surface 2a, while, when the clamping bolts 9 are fastened, being capable of elastic deformation via the annular grooves 32 , 42 in the directions to increase their external diameters. Planar portions 28a are formed at the two outer surface portions of the second reference member 20 between its two tapered engagement surfaces 28, and it is arranged for the annular engagement portion 41 not to contact closely against these planar portions 28a.

It should be understood that, as an example of modified annular grooves 32, 42, press in flange portions may be formed on the end portions on die M side of the external peripheral wall portions 33, 43 of the first and second annular engagement members 30, 40, with the other portions of the external peripheral wall portions 33, 43 being omitted. Along with the first and second annular engagement members 30, 40 being fixed to the die M via these press in flange portions, it would also be acceptable to arrange to increase the sizes of the annular grooves 32, 42 from the press in flange portions up to the region on the fixed plate 2 side. In this case the annular engagement portions 31, 41, along with having moderate rigidity in the directions parallel to the surface 2a, are built so as, via the annular grooves, to be capable of elastic deformation in the direction to increase their external diameters.

The pair of clamping bolts 9 are provided to correspond to the bolt holes 13, 23 of the first and second reference members 10, 20. The die M can be fixed to the surface 2a by screwingly engaging the clamping bolts 9 through the bolt through holes 7a into the bolt holes 13, 32. It is arranged for each of the annular engagement portions 31, 41 of the first and second annular engagement members 30, 40 to be elastically deformed in the direction to increase its external diameter due to the engagement operation of the clamping bolts 9, and to be closely engaged to the respective one of the tapered engagement surfaces 18, 28 of the tapered convex engagement portions 12, 22.

On the die M, a pair of bolt through holes 7b are formed at the pair of corner portions that are different from the pair of corner portions where the first and second reference members 10, 20 are provided, in other words at the upper left corner portion and the lower right corner portion in Fig. 1, and a pair of bolt holes 13a are formed in the fixed plate 2 from the surface 2a concentrically with the pair of bolt through holes 7b. A pair of clamping bolts are provided to correspond to these bolt through holes 7b. The die M can be fixed to the surface 2a by passing each of the bolts for clamping 9 through one of the bolt through holes 7b and screwingly engaging it to one of the bolt holes 13a. It should be understood that the movable die is positioned and fixed to the surface of the movable plate with a similar die positioning / fixing device to the die positioning / fixing device 3.

The operation and the advantages of the die positioning / fixing device 3 described above will now be explained.
By approaching the die M to the surface 2a, by respectively engaging the annular engagement portions 31, 41 of the first and second positioning mechanisms 10P, 20P to the tapered convex engagement portions 12, 22 on the side of the surface 2a, and by passing the clamping bolts 9 from the bolt holes 7a in the die M into the bolt holes 13, 23 on the side of the fixed plate 2 and screwingly engaging them thereinto, and by thus elastically deforming the annular engagement portions 31, 41 of the first and second positioning mechanisms 10P, 20P so as to increase their external diameters, thus closely contacting them to the tapered convex engagement portions 12, 22 respectively, it is possible to position the die M in the direction orthogonal to the surface 2a by the orthogonal direction positioning mechanism 5P, it is possible to position the die M in directions parallel to the surface 2a by the first positioning mechanism 10P, and it is possible to regulate, position, and fix the die M by the second positioning mechanism 20P so that it does not rotate in the direction parallel to the surface 2a around the first positioning mechanism 10P as a center.

At this time it is possible to position the die M at high accuracy, since the annular engagement portions 31, 41 are elastically deformed in the direction to increase their external diameters and are closely engaged to the tapered convex engagement portions 12, 22. Moreover, since no adjustment work for positioning the members is necessary during this positioning and fixing, accordingly it is possible to perform the positioning and fixing procedure rapidly, and it is possible to manufacture the device at a cheap cost, since it is possible to build the core of the first and second positioning mechanisms 10P, 20P in a simple and compact manner. Moreover, since it is possible to do without any locator ring on the rear surface of the die M and any concave circular portion on the surface side, accordingly it is also possible to maintain the applicability to general uses of the die M and of the fixed plate 2.

Not only is it possible to obtain a guidance function as the die M is being approached to the surface 2a due to the tapered convex engagement portions 12, 22, but also the tapered convex engagement portions 12, 22 can be fixed in a simple manner to the fixed plate 2 via the flange portions 11 , 21 that are formed integrally therewith. Since, via the annular grooves 32, 42, the annular engagement portions 31, 41 have structures capable of elastically deforming in the direction to increase their external diameters, accordingly it is possible to employ a construction in which the annular engagement members 30, 40 are fitted into and fixed in the concave portions 34, 44 for attaching the die M.

Moreover since, in plan view, the pair of tapered engagement surfaces 28 oppose one another in the direction that is orthogonal to the center line L, accordingly, while the rotation of the die M in the direction parallel to the surface 2a of the second reference member around the first reference member 10 as a center is regulated, it is still possible to engage the annular engagement portion 41 closely with the tapered convex engagement portion 22, since a certain minute shifting of the second annular engagement member 40 is permitted along the direction of the center line L with respect to the tapered convex engagement portion 22 of the second reference member 20.

Since, in the first and second reference members 10, 20, the bolt head portion receiving apertures 15a, 25a are partially overlapped over the tapered convex engagement portions 12, 22 as seen in elevation view, accordingly it is possible to make the flange portions 11, 21 more compact, so that it is possible to anticipate making the first and second reference members 10, 20 more compact. Since it is arranged to generate the clamping force for fixing the die M with the clamping bolts 9, accordingly it is possible to simplify the structure of the die positioning / fixing device 3, and to reduce and economize on the cost of production.

### EMBODIMENT 2

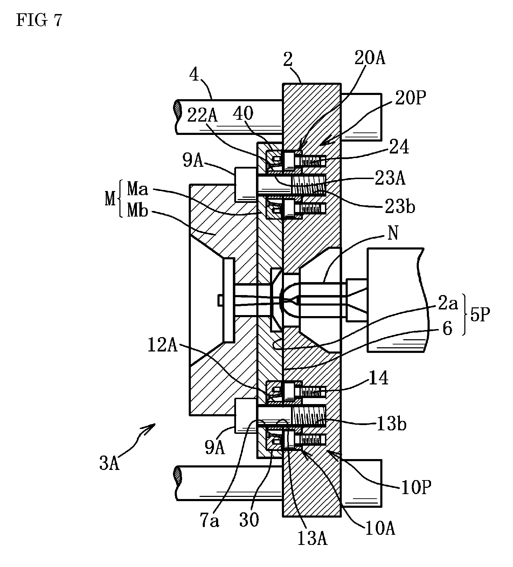

Since the die positioning / fixing device 3A shown in Fig. 7 is , in principle, fundamentally a device similar to the die positioning / fixing device 3 of the first embodiment, accordingly similar reference numerals will be appended to members that are similar to ones of the first embodiment, and explanation thereof will be omitted. However, since only the construction corresponding to the clamping bolts 9A is different, accordingly only this different construction will be explained.

As shown in Fig. 7, instead of the bolt holes of the tapered convex engagement portions 12A, 22A of the first and second reference members 10A, 20A, bolt through holes 13A, 23A are formed, and a pair of bolt holes 13b, 23b that correspond to these bolt through holes 13A, 23A are formed in the fixed plate 2. The clamping bolts 9A, 9A are passed from the bolt through holes 7a, 7A into the bolt through holes 13A, 23A, and it is arranged for those bolts 9A, 9A to be screwingly engaged into the bolt holes 13b, 23b. Since, with this structure, the clamping force does not operate on the first and second reference members 10A, 20A, accordingly it is possible to reduce the number of the bolts 9A that fix the first and second reference members 10A and 20A to the fixed plate 2, and/or it is possible to reduce their diameters.

### EMBODIMENT 3

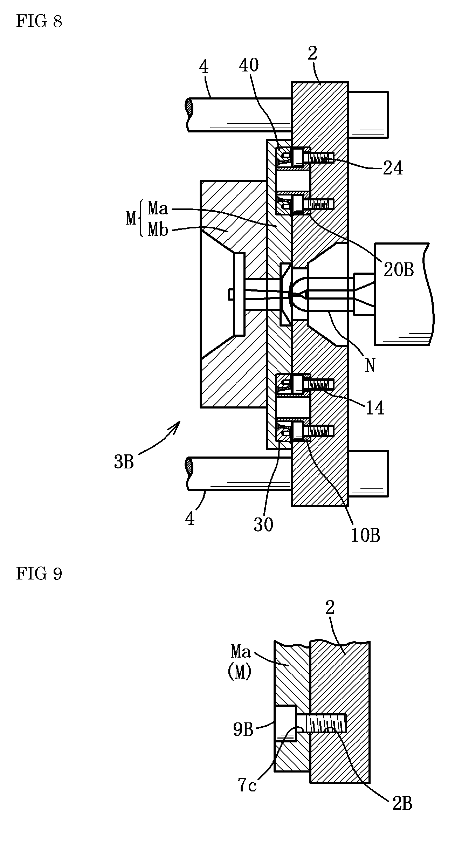

Since the die positioning / fixing device 3B shown in Fig. 8 is fundamentally a device similar to the die positioning / fixing device 3 of the first embodiment, accordingly similar reference numerals will be appended to members that are similar to ones of the first embodiment, and explanation thereof will be omitted. However, since only the construction corresponding to the clamping bolts 9A is different, accordingly only this different construction will be explained.

As shown in Figs. 8 and 9, the die M is fixed to the fixed plate 2 by screwingly engaging clamping bolts 9B through bolt through holes 7c of the die M into bolt holes 2B of the fixed plate 2 at positions in the neighborhood of the first reference member 10B. In a similar manner, the die M is fixed to the fixed plate 2 by clamping bolts 9B at positions in the neighborhood of the second reference member 20B.

### EMBODIMENT 4

In a similar manner to the die positioning / fixing device 3 of the first embodiment, this die positioning / fixing device 3C is a device for positioning and fixing the fixed side die M on the surface 2a of the fixed plate 2 in the directions parallel to and orthogonal to the surface 2A. Similar reference numerals will be appended to members that are similar to ones of the first embodiment, and description thereof will be omitted.

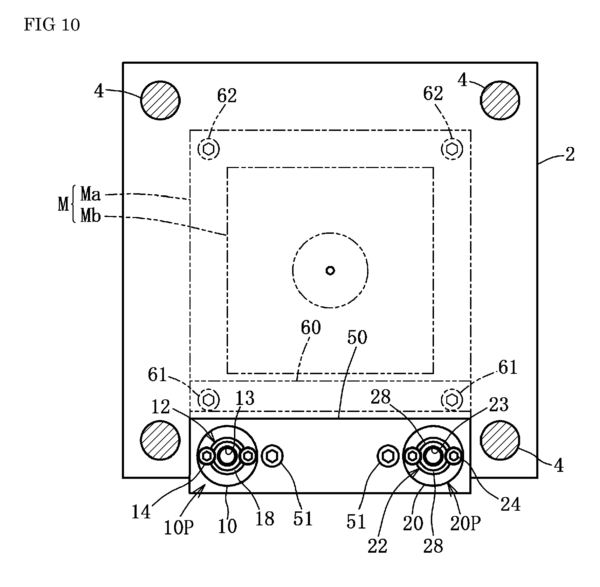

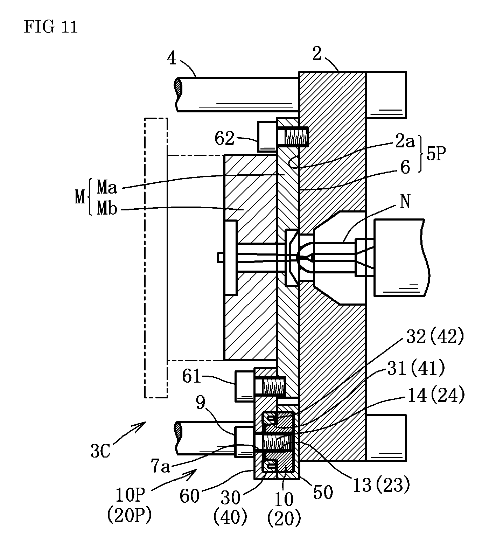

As shown in Figs. 10 and 11, along with a first auxiliary member 50 being fixedly provided on the surface 2a of the fixed plate 2, a second auxiliary member 60 that corresponds to the first auxiliary member 50 is fixedly provided on the die M. The first auxiliary member 50 is a member having the same thickness as the die plate Ma, and is provided in a state of being approached to and extending parallel to the lower outer edge of the die plate Ma and is fixed to the fixed plate 2 by a pair of fixing bolts 51.

The second auxiliary member 60 is a member that has approximately the same thickness as the first auxiliary member 50 and that is wider than the first auxiliary member 50, that is arranged in a state of contacting against the entire surface of the first auxiliary member 50 and moreover in a state of being wrapped on the lower edge portion of the die plate Ma, and that is fixed to the die plate Ma by a pair of fixing bolts 61. It should be understood that both the left and right end portions of the upper edge portion of the die plate Ma of the die M are fixed to the fixed plate 2 by a pair of bolts 62.

A first positioning mechanism 10P that positions the die M in directions parallel to the surface 2a is provided in the neighborhood of the left ends in Fig. 10 of the first and second auxiliary members 50, 60. And a second positioning mechanism 20P that is provided at a position apart from the first positioning mechanism 10P and that regulates and positions the rotation of the die M in the direction parallel to the surface 2A around the first positioning mechanism 10P as a center is provided in the neighborhood of the right ends in Fig. 10 of the first and second auxiliary members 50, 60. Moreover, an orthogonal direction positioning mechanism 5P that positions the die M in the direction orthogonal to the surface 2a is provided to the die M and to the fixed plate 2.

The surface 2a of the fixed plate 2 is formed as a vertical flat plane, and the die M is positioned in the direction orthogonal to the surface 2a by closely contacting the rear surface 6 of the die M to the surface 2a. In other words, the surface 2a and the rear surface 6 of the die M constitute the orthogonal direction positioning mechanism 5P.

The first positioning mechanism 10P comprises a tapered convex engagement portion 12 that is provided to the first reference member 10 on the first auxiliary member 50 side, an annular engagement portion 31 that is provided to the first annular engagement member 30 on the second auxiliary member 60 side and that moreover is capable of engaging with the tapered convex engagement portion 12, and an annular groove 32. Since this first positioning mechanism 10P has a construction that is similar to that of the first positioning mechanism 10P of the first embodiment, accordingly similar reference symbols will be appended to similar elements thereof with explanation thereof being omitted, and only the differences in structure will be explained.

With the lower edge portion of the first auxiliary member 50 in the relationship of protruding slightly over the lower outer edge of the fixed plate 2, the first and second reference members 50, 60 are fixed to the fixed plate 2 by two bolts 14, 24 respectively. However, if it is possible to arrange a structure in which the entire first auxiliary member 50 is contacted against the surface 2a, then it would also be acceptable to arrange to fix the first and second reference members 10, 20 with three or more bolts 14. 24.

The second positioning mechanism 20P comprises a tapered convex engagement portion 22 that is provided to the second reference member 20 on the first auxiliary member 50 side, an annular engagement portion 41 that is provided to the second annular engagement member 40 on the second auxiliary member 60 side and that moreover is capable of engaging with the tapered convex engagement portion 22, and an annular groove 42. The tapered engagement surfaces 28 of the tapered convex engagement portion 22 oppose one another along a direction that is orthogonal to the center line that joins the axes of the first and second reference members 10 and 20. Since this second positioning mechanism 20P has a construction that is similar to that of the second positioning mechanism 20P of the first embodiment, accordingly similar reference numerals will be appended to similar elements thereof with explanation thereof being omitted, and only the differences in structure will be explained.

In the first positioning mechanism 10P, by passing the clamping bolt 9 through the bolt through hole 7a and by screwingly engaging it into the bolt hole 13 in the central portion of the first reference member 10, the second auxiliary member 60, in other words the die M, is fixed to the first reference member 50, and is fixed to the fixed plate 2 via the first reference member 50. In a similar manner, in the second positioning mechanism 20P, by passing the clamping bolt 9 through the bolt through hole 7a and by screwingly engaging it into the bolt hole 23 in the central portion of the second reference member 20, the second auxiliary member 60, in other words the die M, is fixed to the first reference member 50, and is fixed to the fixed plate 2 via the first reference member 50. Due to the engaging operation of the clamping bolts 9, the annular engagement portions 31, 41 of the first and second positioning mechanisms 10P, 20P are both elastically deformed in the direction to increase their external diameters, and are closely contacted to the tapered convex engagement portions 12, 22 respectively.

According to this die positioning / fixing device 3C, it is not necessary to install the first and second reference members 10, 20 to the fixed plate 2, and, for example, it suffices only to form a plurality of bolt holes in the fixed plate 2, and moreover it suffices only to form a plurality of bolt holes and a plurality of bolt through holes in the die M. Due to this, the applicability to general uses of the fixed plate 2 and the applicability to general uses of the die M are not lost, since it suffices only to perform the minimum limit of processing work on the fixed plate 2 and the die M, and it is possible to maintain their applicability to general uses; and, moreover, it is possible to apply this die positioning / fixing device 3C widely to existing injection molding machines.

Examples in which the above embodiments are partially altered will now be explained.
(1) In the fourth embodiment described above it would also be acceptable to provide a structure in which, according to requirements, along with positioning the first auxiliary member 50 on the fixed plate 2 via a plurality of knock pins, the second auxiliary member 60 is also positioned with respect to the fixed side die M via a plurality of knock pins.
(2) In the fourth embodiment described above, it would also be possible to provide a plurality of first and second auxiliary members as the first and second auxiliary members 50, 60; and, moreover, the pattern of arrangement of the first and second auxiliary members 50, 60 and of the first and second reference members 10, 20 is not limited to that shown in the figure, it would be possible to employ various patterns of configuration.
(3) While the first through the fourth embodiment described above have been explained in terms of examples of devices for positioning / fixing the die of an injection molding machine to the fixed plate thereof, the present invention can also be applied in a similar manner to a device for positioning / fixing a die to a die fixing plate or to die attachment plates in pressing machines or forming machines of various types.
(4) Apart from the above, for a person who is skilled in the art, it would be possible to implement various changes and additions to the above embodiments without deviating from the spirit of the present invention.

### INDUSTRIAL APPLICABILITY

In an injection molding machine, a pressing machine, or a machine of some other type, it is possible to apply the present invention to a device that positions and fixes a die to the surface of a plate member at high accuracy.

### DESCRIPTION OF NUMERALS

2: fixed plate
2a: surface
3, 3A, 3B, 3C: die positioning / fixing mechanism
5P: orthogonal direction positioning mechanism
7a, 7b, 7c: bolt through hole
9, 9A, 9B: clamping bolt
10P, 20P: first and second positioning mechanism
10, 20: first and second reference member
11, 21: flange portion
12, 22: tapered convex engagement portion
13, 13b, 2B, 23: bolt hole
18, 28: tapered engagement surface
30, 40: first and second annular engagement member
31, 41: annular engagement portion
32, 42: annular groove
50, 60: first and second auxiliary member

## Claims

1. A die positioning / fixing device for positioning and fixing a die on a surface of a plate member in directions parallel to the surface of the plate member and in a direction orthogonal thereto; wherein said die positioning / fixing device is **characterized in that**:
the die and the plate member comprise a first positioning mechanism that positions the die in directions parallel to the surface of the plate member, a second positioning mechanism that is disposed at a position apart from the first positioning mechanism and that regulates and positions the die so as not to rotate in the directions parallel to the surface of the plate member around the first positioning mechanism, and a orthogonal direction positioning mechanism that positions the die in a direction orthogonal to the surface of the plate member;
each of the first and second positioning mechanisms comprises a tapered convex engagement portion that is provided to the plate member, and an annular engagement portion that is provided to the die and that can engage with the tapered convex engagement portion;
there are provided with a plurality of bolt holes that are formed in the plate member side, a plurality of bolt through holes that are formed in the die so as to correspond to the plurality of bolt holes, and a plurality of clamping bolts that can pass through the plurality of bolt through holes and can each be screwingly engaged with one of the plurality of bolt holes; and
by means of screwingly engagement operation of the clamping bolts, the annular engagement portions of the first and second positioning mechanisms are both elastically deformed so as to increase their external diameters and so as each to engage closely to its corresponding tapered convex engagement portion.

2. A die positioning / fixing device according to claim 1; wherein the tapered convex engagement portion is provided with one or more tapered engagement surfaces that reduce in diameter towards the die, and is fixed to the plate member via a flange formed integrally with the tapered convex engagement portion.

3. A die positioning / fixing device according to claim 1 or claim 2; wherein the annular engagement portion is formed on an annular engagement member fixed to the die, the annular engagement member having an annular groove that surrounds an external periphery of the annular engagement portion and that permits elastic deformation of the annular engagement portion so as to increase its external diameter.

4. A die positioning / fixing device for positioning and fixing a die on a surface of a plate member in directions parallel to the surface of the plate member and in a direction orthogonal thereto; wherein said die positioning / fixing device is **characterized in that**:
a first auxiliary member is fixedly provided to the surface of the plate member, a second auxiliary member corresponding to the first auxiliary member is fixedly provided to the die;
the first and second auxiliary members comprise a first positioning mechanism that positions the die in directions parallel to the surface of the plate member, and a second positioning mechanism that is disposed at a position apart from the first positioning mechanism and that regulates and positions the die so as not to rotate in the directions parallel to the surface of the plate member around the first positioning mechanism;
the die and the plate member comprise an orthogonal direction positioning mechanism that positions the die in the direction orthogonal to the surface of the plate member;
each of the first and second positioning mechanisms comprises a tapered convex engagement portion that is provided to the first auxiliary member, and an annular engagement portion that is provided to the second auxiliary member and that can engage with the tapered convex engagement portion;
there are provided with a plurality of bolt holes that are formed in the first auxiliary member side, a plurality of bolt through holes that are formed in the second auxiliary member so as to correspond to the plurality of bolt holes, and a plurality of clamping bolts that can pass through the plurality of bolt through holes and can each be screwingly engaged with one of the plurality of bolt holes; and
by means of screwingly engagement operation of the clamping bolts, the annular engagement portions of the first and second positioning mechanisms are both elastically deformed so as to increase their external diameters and so as each to engage closely to its corresponding tapered convex engagement portion.

5. A die positioning / fixing device according to claim 4; wherein the tapered convex engagement portion is provided with one or more tapered engagement surfaces that reduce in diameter towards the second auxiliary member, and is fixed to the first auxiliary member via a flange formed integrally with the tapered convex engagement portion.

6. A die positioning / fixing device according to claim 4 or claim 5; wherein the annular engagement portion is formed on an annular engagement member fixed to the second auxiliary member, the annular engagement member having an annular groove that surrounds an external periphery of the annular engagement portion and that permits elastic deformation of the annular engagement portion so as to increase its external diameter.
